# EUROPEAN PATENT APPLICATION

(11) **EP 4 471 074 A1**
(43) Date of publication of application: **04.12.2024**
(21) Application number: 23743473.3
(22) Date of filing: 19.01.2023
(51) Int. Cl.: C08G 61/02, C08G 61/12, C08J 5/22, H01M 8/1081, H01M 8/1058, H01M 8/083, H01M 8/103, C25B 13/08

(54) **NOVEL POLY(SPIROBISINDANE-ARYL PIPERIDINIUM) COPOLYMER IONOMER, ANION EXCHANGE MEMBRANE, AND METHOD FOR PREPARING SAME**

(30) Priority: 24.01.2022 KR 20220009888
(71) Applicant: IUCF-HYU (INDUSTRY-UNIVERSITY COOPERATION FOUNDATION HANYANG UNIVERSITY), Seoul 04763 (KR)
(72) Inventor: LEE, Young Moo, Seoul 06602 (KR); PARK, Jong Hyeong, Seoul 04763 (KR); HU, Chuan, Seoul 04763 (KR)
(74) Representative: dompatent von Kreisler Selting Werner - Partnerschaft von Patent- und Rechtsanwälten mbB
(86) International application number: PCT/KR2023/000901
(87) International publication number: WO 2023/140628

(57) **Abstract**

The present disclosure relates to a technology for synthesizing a poly(spirobisindane-aryl piperidinium) copolymer containing a spirobisindane group in a repeating unit with no aryl ether bond in a polymer backbone, and preparing an anion-exchange membrane therefrom. A novel poly(spirobisindane-aryl piperidinium) copolymer ionomer according to the present disclosure has excellent chemical stability and mechanical properties, high ionic conductivity, improved gas permeability, and reduced material transfer resistance. In addition, an anion-exchange membrane and a composite membrane prepared from the poly(spirobisindane-aryl piperidinium) copolymer ionomer have excellent chemical stability, mechanical properties, durability and water management ability and, thus, can be applied to membranes and binders for alkaline fuel cells, water electrolysis devices, carbon dioxide reduction, metal-air batteries, etc.

## Description

### [Technical Field]

The present disclosure relates to a novel poly(spirobisindane-aryl piperidinium) copolymer ionomer, an anion-exchange membrane, and a method for preparing the same, more specifically to a technology for synthesizing a poly(spirobisindane-aryl piperidinium) copolymer containing a spirobisindane group within a repeating unit with no aryl ether bond in a polymer backbone and containing a piperidinium group in a repeating unit and preparing an anion-exchange membrane therefrom for application to alkaline fuel cells, water electrolysis devices, carbon dioxide reduction, metal-air batteries, etc.

### [Background Art]

Until now, many researches have been conducted on polymer electrolyte membrane fuel cells (PEMFCs) owing to their relatively high current density and environmental friendliness. In particular, perfluorocarbon-based proton-exchange membranes represented by Nafion have been mainly used as polymer electrolyte membranes. However, since the use of platinum-based precious metal catalysts is essential for Nafion membranes because of low oxygen reduction reaction (ORR) activity, researches are being carried out actively, including the development of aromatic hydrocarbon-based polymer electrolyte membranes, etc., for replacing Nafion which is very expensive and has a low glass transition temperature.

In this regard, researches are being carried out continuously on alkaline membrane fuel cells (AMFCs) and water electrolysis using anion-exchange membranes since it is known that excellent performance and extremely high price competitiveness can be achieved even when inexpensive non-precious metals such as nickel, manganese, etc. are used as electrode catalysts instead of platinum. However, because of poor long-term stability problems caused by the decomposition behavior of hydroxyl radicals and ions during operation, researches are needed to improve the durability of the alkaline membrane fuel cells.

As the anion-exchange membrane for use in alkali membrane fuel cells, a synthesis method of introducing a benzyltrimethylammonium group into an aryl ether-based aromatic polymer such as polysulfone (PSF), polyphenyl ether (PPO) or polyether ether ketone (PEEK) is known. This method is advantageous in that the solubility of the polymer is improved as repeating units with aryl ether (C-O) bonds are formed along the polymer main chain. However, on the other hand, since the aryl ether bonds in the polymer main chain cause decreased long-term stability due to the hydroxyl radical degradation behavior of the electrolyte membrane during operation, it is necessary to improve the durability of the alkaline membrane fuel cell by preventing the decomposition of the polymer main chain.

In addition, since anion-exchange membranes have limited chemical stability (less than 500 hours in 1 M NaOH solution at 80 °C) and mechanical properties (tensile strength lower than 30 MPa), fuel cells using the same have the disadvantages of low power density (0.1-0.5 W cm⁻²) and low durability. Also, due to the high adsorption effect of the phenyl structure, there is a problem that the formation of a three-phase interface is limited and fuel efficiency is decreased when it is used as a binder.

Furthermore, the moisture permeability of the anion-exchange polymer is very important for water management in anion-exchange membrane fuel cells. While water may overflow at the positive electrode due to electrochemical water generation, the negative electrode tends to be dry due to water consumption. Therefore, the polymers with high moisture content and expansion rate greatly affect durability since material transfer resistance increases and electrochemical stability is hindered.

Meanwhile, a poly(spirobisindane-aryl piperidinium) copolymer ionomer containing a spirobisindane group and a piperidinium group in a repeating unit with no aryl ether bond in a containing a polymer backbone has not been synthesized yet, and no technology for applying the same to alkaline fuel cell membranes, binders or water electrolysis is known specifically.

The inventors of the present disclosure have conducted researches repeatedly to expand the applications of aromatic polymer ion-exchange membranes having excellent thermal and chemical stability and mechanical properties. They have sought to solve the problems of existing anion-exchange polymers such as low ion conductivity, moisture content, mechanical properties, power density, durability, etc. introducing a spirobisindane group and a piperidinium group within the repeating unit of the anion-exchange polymer. In other words, the present disclosure was completed by synthesizing a poly(spirobisindane-aryl piperidinium) copolymer ionomer containing a spirobisindane group and a piperidinium group with no aryl ether bond in the polymer backbone, preparing an anion-exchange membrane therefrom and finding out that they can be applied to membranes and binders for alkaline fuel cells, water electrolysis devices, carbon dioxide reduction, metal-air batteries, etc.

### [References of Related Art]

### [Patent Documents]

(Patent document 1) Patent document 1. Korean Patent Publication No. 10-2018-0121961.
(Patent document 2) Patent document 2. International Patent Publication No. WO 2019/068051.
(Patent document 3) Patent document 3. Japanese Patent Publication No. JP 2020-536165.
(Patent document 4) Patent document 4. US Patent Publication No. US 2019/0036143.

### [Disclosure]

### [Technical Problem]

The present disclosure was designed in consideration of the above-described problems and, in an aspect, is directed to providing a novel poly(spirobisindane-aryl piperidinium) copolymer ionomer with excellent chemical stability and mechanical properties, high ionic conductivity, improved gas permeability and reduced material transfer resistance, and a method for preparing the same.

In another aspect, the present disclosure is directed to preparing an anion-exchange membrane and a composite membrane thereof from the novel poly(spirobisindane-aryl piperidinium) copolymer ionomer for application to membranes and binders for alkaline fuel cells, water electrolysis devices, carbon dioxide reduction, metal-air batteries, etc. with excellent chemical stability, mechanical properties, durability and water management ability.

### [Technical Solution]

The present disclosure provides a poly(spirobisindane-aryl piperidinium) copolymer ionomer having a repeating unit represented by <Chemical Formula 1>.

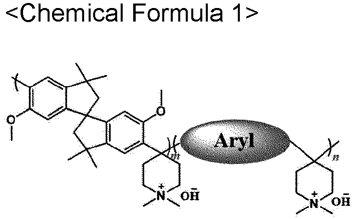

In Chemical Formula 1, Aryl is any one selected from the compounds represented by the following structural formulas: 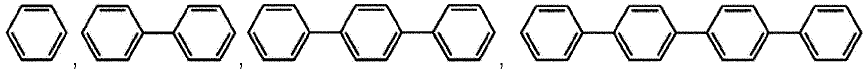 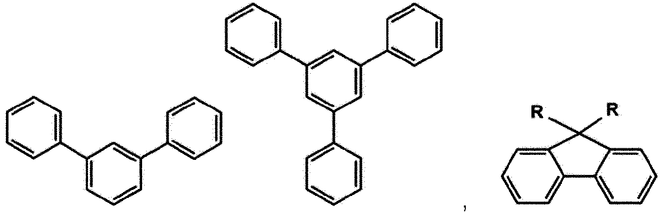 (R = H or CH₃), 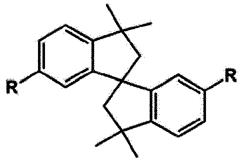 (R = H, OH or C₁-C₅ alkoxy), 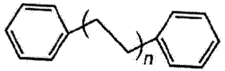 (n is an integer from 1 to 10), and
m and n are mole fractions (%) in the repeating unit of the copolymer ionomer (m > 0, n > 0, m + n = 100).

In addition, the present disclosure provides a method for preparing a spirobisindane-aryl piperidinium) copolymer ionomer, which includes:
(I) a step of forming a solution by dissolving a monomer selected from 6,6'-dimethoxy-3,3,3',3'-tetramethyl-2,2',3,3'-tetrahydro-1,1'-spirobisindane, 1-methyl-4-piperidone and the compounds represented by the following structural formulas in an organic solvent: 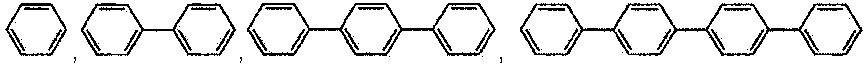 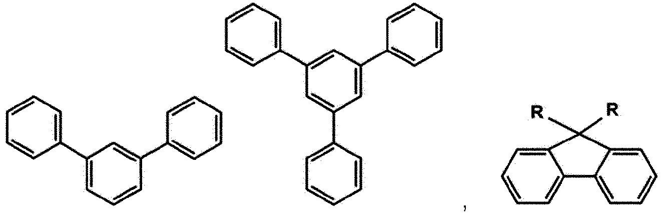 (R = H or CH₃), 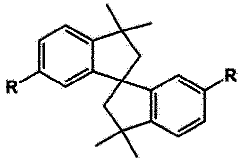 (R = H, OH or C₁-C₅ alkoxy), 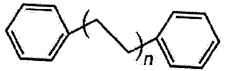 (n is an integer from 1 to 10);
(II) a step of obtaining a viscous solution by slowly adding a strong acid catalyst to the solution and then stirring and reacting the same;
(III) a step of obtaining a solid polymer by precipitating, washing and drying the viscous solution;
(IV) a step of forming a quaternary piperidinium salt by adding K₂CO₃ and an excess amount of a halomethane to a polymer solution obtained by dissolving the solid polymer in an organic solvent and reacting the same; and
(V) a step of precipitating, washing and drying the polymer solution.

In addition, the present disclosure provides an anion-exchange membrane containing the poly(spirobisindane-aryl piperidinium) copolymer ionomer.

In addition, the present disclosure provides an anion-exchange composite membrane containing: a porous polymer support; and the anion-exchange membrane impregnated in the porous polymer support.

In addition, the present disclosure provides a method for preparing an anion-exchange membrane, which includes: (a) a step of forming a polymer solution by dissolving the poly(spirobisindane-aryl piperidinium) copolymer ionomer in an organic solvent; (b) a step of obtaining a membrane by casting the polymer solution on a glass plate and drying the same; and (c) a step of treating the obtained membrane with 1 M NaHCOs or 1 M NaOH, washing with ultrapure water and drying the same.

In addition, the present disclosure provides a method for preparing an anion-exchange composite membrane, which includes: (i) a step of preparing a porous polymer support; (ii) a step of obtaining an ionomer solution by adding a cosolvent to a polymer solution obtained by dissolving the poly(spirobisindane-aryl piperidinium) copolymer ionomer in an organic solvent; and (iii) a step of casting the ionomer solution onto the porous polymer support and impregnating and drying the same.

In addition, the present disclosure provides a binder for an alkaline fuel cell, which contains the poly(spirobisindane-aryl piperidinium) copolymer ionomer.

In addition, the present disclosure provides an alkaline fuel cell including the anion-exchange membrane or the anion-exchange composite membrane.

In addition, the present disclosure provides a water electrolysis device including the anion-exchange membrane or the anion-exchange composite membrane.

In addition, the present disclosure provides a carbon dioxide reduction device including the anion-exchange membrane or the anion-exchange composite membrane.

In addition, the present disclosure provides a metal-air battery including the anion-exchange membrane or the anion-exchange composite membrane.

### [Advantageous Effects]

A novel poly(spirobisindane-aryl piperidinium) copolymer ionomer according to the present disclosure has excellent chemical stability and mechanical properties, high ionic conductivity, improved gas permeability, and reduced material transfer resistance.

In addition, an anion-exchange membrane and a composite membrane thereof prepared from the poly(spirobisindane-aryl piperidinium) copolymer ionomer have excellent chemical stability, mechanical properties, durability and water management ability and, thus, can be applied to membranes and binders for alkaline fuel cells, water electrolysis devices, carbon dioxide reduction, metal-air batteries, etc.

### [Brief Description of Drawings]

FIG. 1 shows the nuclear magnetic resonance (¹H NMR) spectra of PSTM and PSTP prepared in Example 1 of the present disclosure.
FIG. 2 shows the nuclear magnetic resonance (¹H NMR) spectra of PSBM and PSBP prepared in Example 2 of the present disclosure.
FIG. 3 shows the nuclear magnetic resonance (¹H NMR) spectra of PSDM-20 and PSDP-20 prepared in Example 3 of the present disclosure.
FIG. 4 shows the dimensional stability of anion-exchange membranes prepared in Examples 1 to 3 of the present disclosure.
FIG. 5 shows the mechanical properties of anion-exchange membranes prepared in Examples 1 to 3 of the present disclosure.
FIG. 6 shows the ion conductivity of anion-exchange membranes prepared in Examples 1 and 2 of the present disclosure.
FIG. 7 shows the ion channel size and phase separation of anion-exchange membranes prepared in Examples 1 to 3 of the present disclosure.
FIG. 8 shows the hydrogen permeability (a) and water permeability (b) of an anion-exchange membrane (PSTP-20) prepared in Example 1 of the present disclosure, anion-exchange membranes (PFTP, PFBP) prepared in Comparative Examples 1 and 2, and a commercial anion-exchange membrane (FAA-3-50) as a control group.
FIG. 9 shows the fuel cell performance of an anion-exchange membrane prepared in Example 1 of the present disclosure.
FIG. 10 shows the CO₂ absorption/desorption behavior of an anion-exchange membrane (PSTP-20) prepared in Example 1 of the present disclosure, anion-exchange membranes (PFTP, PFBP) prepared in Comparative Examples 1 and 2, and a commercial anion-exchange membrane (FAAM) as a control group.
FIG. 11 shows the water diffusivity (H₂O diffusivity) of an anion-exchange membrane (PSBP-10) prepared in Example 2 of the present disclosure, anion-exchange membranes (PFTP, PFBP) prepared in Comparative Examples 1 and 2, and a commercial anion-exchange membrane (FAA-3-50) as a control group.

### [Best Mode]

Hereinafter, a novel poly(spirobisindane-aryl piperidinium) copolymer ionomer, an anion-exchange membrane and a method for preparing the same according to the present disclosure will be described in detail.

The present disclosure provides a poly(spirobisindane-aryl piperidinium) copolymer ionomer having a repeating unit represented by <Chemical Formula 1>.

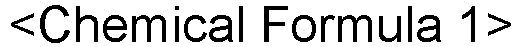

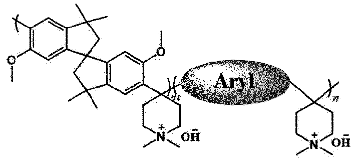

In Chemical Formula 1, Aryl is any one selected from the compounds represented by the following structural formulas: 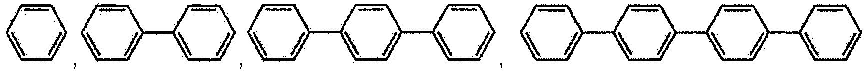 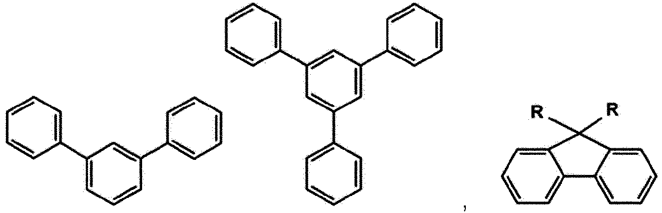 (R = H or CH₃), 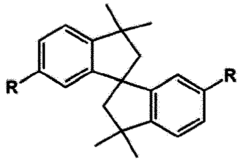 (R = H, OH or C₁-C₅ alkoxy), 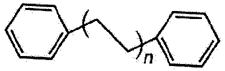 (n is an integer from 1 to 10), and
m and n are mole fractions (%) in the repeating unit of the copolymer ionomer (m > 0, n > 0, m + n = 100).

As shown in Chemical Formula 1, the present disclosure provides a novel poly(spirobisindane-aryl piperidinium) copolymer ionomer, which is basically composed of a stable main chain with no aryl ether bond and a piperidinium group showing high chemical stability, and can greatly improve film-forming ability and mechanical properties.

In particular, due to the introduction of the spirobisindane group, material transfer ability is improved, expansion rate is suppressed, and dimensional stability is improved. Since the bulky structure of the spirobisindane group prevents the main chain from overlapping and shows excellent permeability, the poly(spirobisindane-aryl piperidinium) copolymer ionomer of the present disclosure exhibits high gas permeability and reduced material transfer resistance.

In addition, ion-exchange capacity (IEC), morphology, etc. can be controlled by adjusting the ratio of the spirobisindane group within the repeating unit. If the ratio of the spirobisindane group is high, the copolymer ionomer may be used as a binder since gas permeability is improved. And, if the ratio of the spirobisindane group is low, the copolymer ionomer may be used as an anion-exchange membrane because of excellent mechanical properties and low expansion rate.

Also, the poly(spirobisindane-aryl piperidinium) copolymer ionomer of the present disclosure containing a strong spirobisindane group shows both excellent ionic conductivity and dimensional stability. In addition, since phenyl adsorption is reduced, a three-phase interface is formed easily and excellent electrochemical characteristics are achieved.

Furthermore, since the spirobisindane monomer can be synthesized into a polymer with a large molecular weight due to high reactivity. In addition, since the poly(spirobisindane-aryl piperidinium) copolymer ionomer of the present disclosure exhibits high solubility in organic solvents such as dimethyl sulfoxide (DMSO), it can be prepared into a reinforced composite membrane in large scale through solution casting.

In addition, the present disclosure provides a method for preparing a spirobisindane-aryl piperidinium) copolymer ionomer, which includes:
(I) a step of forming a solution by dissolving a monomer selected from 6,6'-dimethoxy-3,3,3',3'-tetramethyl-2,2',3,3'-tetrahydro-1,1'-spirobisindane, 1-methyl-4-piperidone and the compounds represented by the following structural formulas in an organic solvent: 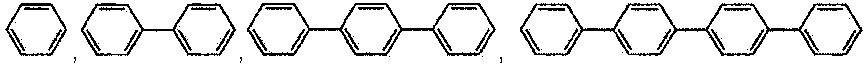 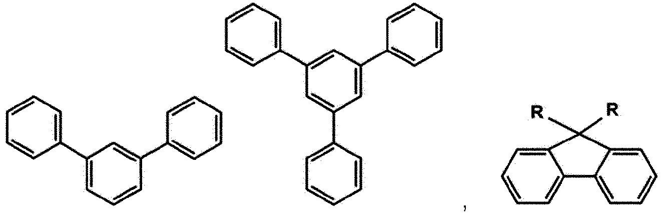 (R = H or CH₃), 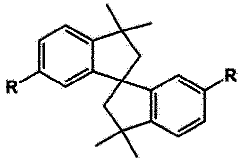 (R = H, OH or C₁-C₅ alkoxy), 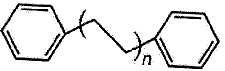 (n is an integer from 1 to 10);
(II) a step of obtaining a viscous solution by slowly adding a strong acid catalyst to the solution and then stirring and reacting the same;
(III) a step of obtaining a solid polymer by precipitating, washing and drying the viscous solution;
(IV) a step of forming a quaternary piperidinium salt by adding K₂CO₃ and an excess amount of a halomethane to a polymer solution obtained by dissolving the solid polymer in an organic solvent and reacting the same; and
(V) a step of precipitating, washing and drying the polymer solution.

First, in order to prepare a poly(spirobisindane-aryl piperidinium) copolymer, a monomer selected from 6,6'-dimethoxy-3,3,3',3'-tetramethyl-2,2',3,3'-tetrahydro-1,1'-spirobisindane, 1-methyl-4-piperidone and the compound represented by the above structural formulas is reacted. At this time, the molar fraction of the spirobisindane monomer within the repeating unit of the copolymer can be adjusted variously, more specifically to 10 to 70%, for use as a binder or an anion-exchange membrane.

Subsequently, by reacting a poly(spirobisindane-aryl piperidinium) copolymer ionomer having various aryl segments composed of the compounds represented by the structural formulas, including spirobisindane segments, with a halomethane, a poly(spirobisindane-aryl piperidinium) copolymer ionomer in which a quaternary piperidinium salt is formed can be prepared.

The organic solvent in the step (I) may be one or more halogen-based solvent selected from a group consisting of dichloromethane, chloroform, dichloroethane, dibromomethane and tetrachloroethane. Specifically, dichloromethane may be used.

And, the strong acid catalyst in the step (II) may be trifluoroacetic acid, trifluoromethanesulfonic acid, pentafluoroethanesulfonic acid, heptafluoro-1-propanesulfonic acid, perfluoropropionic acid, heptafluorobutyric acid or a mixture thereof. Specifically, a mixture of trifluoroacetic acid and trifluoromethanesulfonic acid may be used.

And, the organic solvent in the step (IV) may be N-methylpyrrolidone, dimethylacetamide, dimethyl sulfoxide or dimethylformamide.

Also, in the step (IV), the polymer is reacted with a halomethane to form a quaternary piperidinium salt. Fluoromethane, chloromethane, bromomethane or iodometane, specifically iodometane, may be used as the halomethane.

In addition, the present disclosure provides an anion-exchange membrane containing the poly(spirobisindane-aryl piperidinium) copolymer ionomer.

Furthermore, the present disclosure provides an anion-exchange composite membrane containing: a porous polymer support; and the anion-exchange membrane impregnated in the porous polymer support.

The porous polymer support may be selected from a group consisting of polyethylene, polypropylene, polytetrafluoroethylene, polyvinylidene fluoride, polyhexafluoropropylene and poly(perfluoroalkyl vinyl ether), although not being limited thereto.

Also, the porous polymer support may be specifically one having a pore size of 0.01 to 0.5 µm and a porosity of 50 to 90% for stable impregnation of the poly(spirobisindane-aryl piperidinium) copolymer ionomer solution.

In addition, since most of porous polymer supports are hydrophobic, the surface of the porous polymer support may be fluorinated or hydrophilized in order to improve the affinity between the porous polymer support and the poly(spirobisindane-aryl piperidinium) copolymer for stable impregnation of the polymer ionomer solution in order to form a defect-free anion-exchange membrane.

Specifically, for the fluorination treatment, the porous polymer support is soaked in an ethanol solution, ultrasonically dispersed at -10 °C to 25 °C and then taken out and dried at room temperature. Subsequently, the dried porous polymer support is placed in a vacuum chamber and the inside of the chamber is purged with nitrogen gas to create an inert atmosphere. Thereafter, a fluorinated porous polymer support may be obtained by supplying fluorine gas (500 ± 15 ppm F₂/N₂ at atmospheric pressure) to the vacuum chamber at a rate of 1 L/min and directly fluorinating the surface at room temperature for 5 to 60 minutes, and the remaining fluorine gas is removed using nitrogen gas with a scrubber filled with activated carbon.

Meanwhile, for the hydrophilization treatment, the surface of the porous polymer support may be coated with a C₁-C₃ hydrophilic alkyl alcohol or a hydrophilic polymer such as dopamine or polyvinyl alcohol.

In addition, the present disclosure provides a method for preparing an anion-exchange membrane, which includes: (a) a step of forming a polymer solution by dissolving the poly(spirobisindane-aryl piperidinium) copolymer ionomer in an organic solvent; (b) a step of obtaining a membrane by casting the polymer solution on a glass plate and drying the same; and (c) a step of treating the obtained membrane with 1 M NaHCOs or 1 M NaOH, washing with ultrapure water and drying the same.

The organic solvent in the step (a) may be N-methylpyrrolidone, dimethylacetamide, dimethyl sulfoxide or dimethylformamide.

And, the concentration of the polymer solution is specifically 2 to 30 wt%, more specifically 3.0 to 5.0 wt%. If the concentration of the polymer solution is below 2 wt%, the ability of forming a membrane may decrease. And, if it exceeds 30 wt%, the physical properties of the membrane may deteriorate after preparation because the viscosity increases greatly.

And, specifically, the drying in the step (b) may be performed by gradually removing the organic solvent in an oven at 80 to 90 °C for 24 hours and then completely removing the organic solvent by heating it in a vacuum oven at 120 to 150 °C for 12 hours.

Then, an anion-exchange membrane in which the halide form (I⁻ form, etc.) of the poly(spirobisindane-aryl piperidinium) copolymer ionomer is converted to an HCO₃⁻ or OH- form may be prepared by treating the poly(spirobisindane-aryl piperidinium) ionomer membrane obtained through the steps (a) and (b) with 1 M NaHCOs or 1 M NaOH.

Also, the present disclosure provides a method for preparing an anion-exchange composite membrane, which includes: (i) a step of preparing a porous polymer support; (ii) a step of obtaining an ionomer solution by adding a cosolvent to a polymer solution in which the poly(spirobisindane-aryl piperidinium) copolymer ionomer is dissolved in an organic solvent; and (iii) a step of casting the ionomer solution onto the porous polymer support and impregnating and drying the same.

The surface of the porous polymer support in the step (i) may be fluorinated or hydrophilized, and the fluorination treatment or hydrophilization treatment may be performed by the same method as described above.

And, the organic solvent in the step (ii) may be N-methylpyrrolidone, dimethylacetamide, dimethyl sulfoxide or dimethylformamide. Specifically, dimethyl sulfoxide may be used.

The present disclosure is different from the existing technology in that, in order to improve the degree of impregnation of an ionomer polymer solution impregnated into a porous polymer support during the preparation of a composite membrane, an ionomer polymer solution is obtained by adding a cosolvent to the polymer solution in which the poly(spirobisindane-aryl piperidinium) copolymer is dissolved in an organic solvent, which can be said to be the key technical characteristic of the method for preparing an anion-exchange composite membrane according to the present disclosure. The present disclosure is advantageous in that the preparation process is simple because a composite membrane can be obtained by the simple method of casting the polymer solution onto the porous polymer support and it can be prepared in large scale because the preparation is possible with a high-concentration solution.

The cosolvent may be selected by measuring the contact angle of various organic solvents and calculating the interfacial tension with the porous polymer support. Methanol, ethanol or isopropyl alcohol can be used as a cosolvent. In particular, ethanol is used more specifically.

Specifically, the cosolvent added in the step (ii) may be 2 to 25 wt% based on the polymer solution. If the content of the added cosolvent is less than 2 wt% based on the polymer solution, the porous polymer support may not be easily impregnated with the ionomer polymer solution. And, if the content exceeds 25 wt%, it may be difficult to obtain a high-concentration polymer solution.

In addition, the present disclosure provides a binder for an alkaline fuel cell, which contains the poly(spirobisindane-aryl piperidinium) copolymer ionomer.

In addition, the present disclosure provides an alkaline fuel cell including the anion-exchange membrane or the anion-exchange composite membrane.

In addition, the present disclosure provides a water electrolysis device including the anion-exchange membrane or the anion-exchange composite membrane.

In addition, the present disclosure provides a carbon dioxide reduction device including the anion-exchange membrane or the anion-exchange composite membrane.

In addition, the present disclosure provides a metal-air battery including the anion-exchange membrane or the anion-exchange composite membrane.

Hereinafter, the examples and comparative examples according to the present disclosure will be explained in detail along with the attached drawings.

### [Example 1] Preparation of poly(spirobisindane-aryl piperidinium) copolymer ionomer (PSTP)

As monomers, 6,6'-dimethoxy-3,3,3',3'-tetramethyl-2,2',3,3'-tetramethyl-2,2',3,3'-tetrahydro-1,1'-spirobisindane (1.009 g, 3 mmol), terphenyl (6.218 g, 27 mmol) and 1-methyl-4-piperidone (4.073 g, 36 mmol) were added to a 100-mL reactor. Then, a solution was formed by dissolving the monomers while adding dichloromethane (24 mmol) and stirring the mixture. After cooling the solution to 1 °C, a mixture of trifluoroacetic acid (3.6 mL) and trifluoromethanesulfonic acid (18 mL) was slowly added to the solution. The mixture was stirred and reacted for 8 hours to obtain a viscous solution. A solid poly(spirobisindane-co-terphenyl N-methylpiperidine) copolymer was prepared by pouring the viscous solution to 500 mL of distilled water and drying the same in an oven at 80 °C for 24 hours (yield 94.8%). The copolymer was named PSTM-10.

Next, after obtaining a polymer solution by dissolving the prepared PSTM-10 (10 g, 20 mmol) in dimethyl sulfoxide (100 mL), K₂CO₃ (6.9 g, 50 mmol) and iodometane (8.46 g, 60 mmol) were added to the polymer solution and reacted at room temperature in a dark room for 24 hours to form a quaternary piperidinium salt. Next, a solid poly(spirobisindane-co-terphenyl N,N-dimethylpiperidinium) copolymer ionomer was prepared by precipitating the polymer solution in 500 mL of ethyl acetate, followed by filtering, washing several times with deionized water, and drying in a vacuum oven at 80 °C for 24 hours (yield 92%). It was named PSTP-10 (indicating that the molar fraction of the spirobisindane group in the repeating unit is 10%).

In addition, after synthesizing a poly(spirobisindane-co-terphenyl N-methylpiperidine) copolymers with 20, 40 and 70% molar fractions of the spirobisindane group within the repeating unit in the same manner as described above, except that the contents of the monomers 6,6'-dimethoxy-3,3,3',3'-tetramethyl-2,2',3,3'-tetrahydro-1,1'-spirobisindane were varied (PSTM-20, PSTM-40, PSTM-70), poly(spirobisindane-co-terphenyl N,N-dimethylpiperidinium) copolymer ionomers were prepared. They were named PSTP-20, PSTP-40 and PSTP-70, respectively.

### [Example 2] Preparation of poly(spirobisindane-aryl piperidinium) copolymer ionomer (PSBP)

After synthesizing poly(spirobisindane-co-biphenyl N-methylpiperidine) copolymers (PSBM-10, PSBM-20, PSBM-40, PSBM-70) in the same manner as in Example 1, except that biphenyl was used as a monomer instead of terphenyl, poly(spirobisindane-co-biphenyl N,N-dimethylpiperidinium) copolymer ionomers were prepared, and they were named PSBP-10, PSBP-20, PSBP-40 and PSBP-70, respectively.

### [Example 3] Preparation of poly(spirobisindane-aryl piperidinium) copolymer ionomer (PSDP)

After synthesizing poly(spirobisindane-co-diphenylethane N-methylpiperidine) copolymers (PSDM-10, PSDM-20, PSDM-40, PSDM-70) in the same manner as in Example 1, except that diphenylethane was used as a monomer instead of terphenyl as a monomer, poly(spirobisindane-co-diphenylethane N,N-dimethylpiperidinium) copolymer ionomers were prepared, and they were named PSDP-10, PSDP-20, PSDP-40 and PSDP-70, respectively.

### [Example 4] Preparation of anion-exchange membrane from poly(spirobisindane-aryl piperidinium) copolymer ionomer

A polymer solution with a concentration of 4 wt% was formed by dissolving each of the PSTP, PSBP and PSDP series (1.7 g each) prepared in Examples 1 to 3 in dimethyl sulfoxide. The polymer solution was then filtered with a 0.45-µm PTFE filter, and the resulting transparent solution was cast on a 21 × 24 cm glass plate. PSTP membranes, PSBP membranes, and PSDP membrane (I- form, thickness: 25 ± 5 µm) were obtained by drying the casting solution in an oven at 90 °C for 24 hours to slowly remove the solvent, and then heating in a vacuum oven at 140 °C for 12 hours to completely remove the solvent.

An anion-exchange membrane was prepared by immersing the obtained PSTP membrane, PSBP membrane or PSDP membrane in I⁻ form in a 1 M NaHCO₃ solution or 1 M NaOH aqueous solution (at room temperature for 24 hours) for conversion to HCO₃⁻ or OH- form, followed by washing several times with ultrapure water and drying.

### [Example 5] Preparation of anion-exchange composite membrane

A porous polyethylene (PE) support was prepared (purchased from W-Scope, thickness: 10 µm or 20 µm). An ionomer solution with a concentration of 25 wt% was obtained by adding ethanol as a cosolvent to a polymer solution with a concentration of 27 wt% obtained by dissolving the PSTP-10 obtained in dimethyl sulfoxide. After casting the ionomer solution onto the porous polyethylene support, an anion-exchange composite membrane was prepared by drying it in an oven at 100 °C for 10 minutes to slowly remove the solvent and then drying it in a vacuum oven at 90 °C for 12 hours to completely remove the solvent (PSTP-10@PE).

### [Comparative Example 1] Preparation of anion-exchange membranes (PFTP) with no spirobisindane group

A poly(fluorene-co-terphenyl N,N-dimethylpiperidinium) copolymer ionomer was prepared by the same method as in Example 1, except that 9,9'-dimethylfluorene was used as a monomer instead of 6,6'-dimethoxy-3,3,3',3'-tetramethyl-2,2',3,3'-tetramethylbisindene, and an anion-exchange membrane (PFTP) was prepared therefrom by the same method as in Example 4.

### [Comparative Example 2] Preparation of anion-exchange membrane (PFBP) with no spirobisindane group

A poly(fluoroene-co-biphenyl N,N-dimethylpiperidinium) copolymer ionomer was prepared by the same method as in Example 1, except that 9,9'-dimethylfluorene and biphenyl were used as monomers instead of 6,6'-dimethoxy-3,3,3',3'-tetramethyl-2,2',3,3'-tetrahydro-1,1'-spirobisindane and terphenyl, respectively, and an anion-exchange membrane (PFBP) was prepared therefrom by the same method as in Example 4.

### <Test Example>

Test data such as mechanical properties, morphology, ion-exchange performance, moisture content, expansion rate, ion conductivity, fuel cell performance, etc. of the anion-exchange membranes prepared in the examples and comparative examples of the present disclosure were measured and evaluated using the method described in Korean Patent Publication No. 10-2021-0071810 filed by the inventors of the present disclosure.

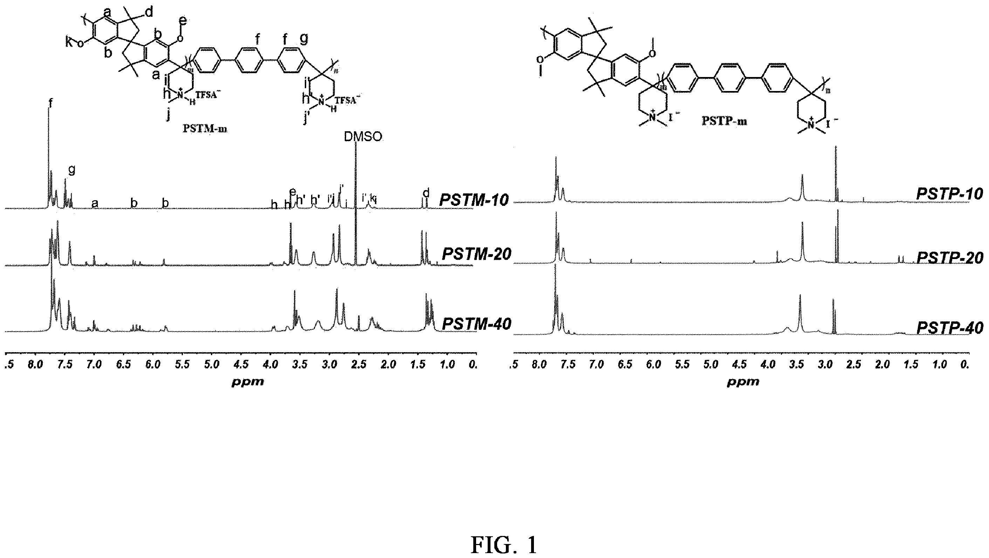

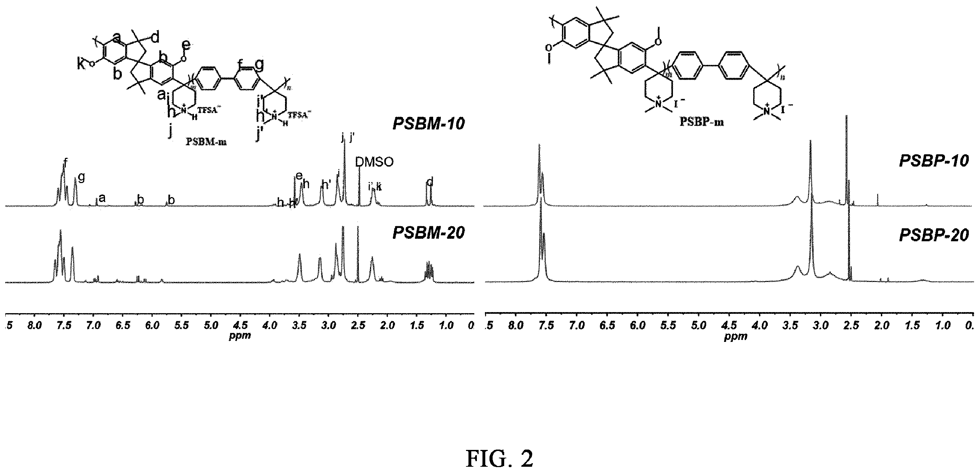

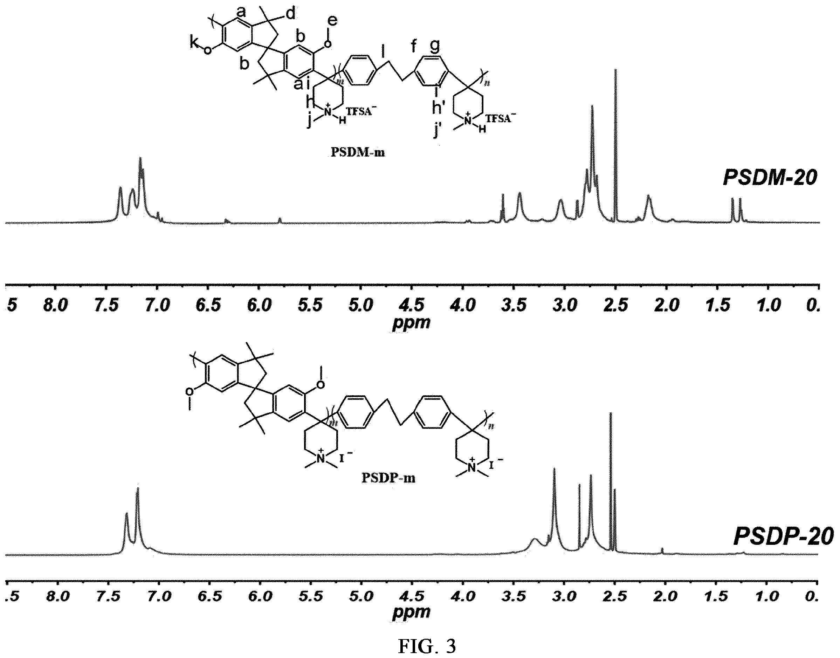

First, FIG. 1 shows the nuclear magnetic resonance (¹H NMR) spectra of PSTM and PSTP prepared in Example 1 of the present disclosure, FIG. 2 shows the nuclear magnetic resonance (¹H NMR) spectra of PSBM and PSBP prepared in Example 2 of the present disclosure, and FIG. 3 shows the nuclear magnetic resonance (¹H NMR) spectra of PSDM-20 and PSDP-20 prepared in Example 3 of the present disclosure. All the synthesized structures showed high purity and characteristic peaks were observed clearly in the nuclear magnetic resonance (¹H NMR) spectra. Therefore, it was confirmed that the poly(spirobisindane-aryl piperidinium) copolymer ionomer was synthesized.

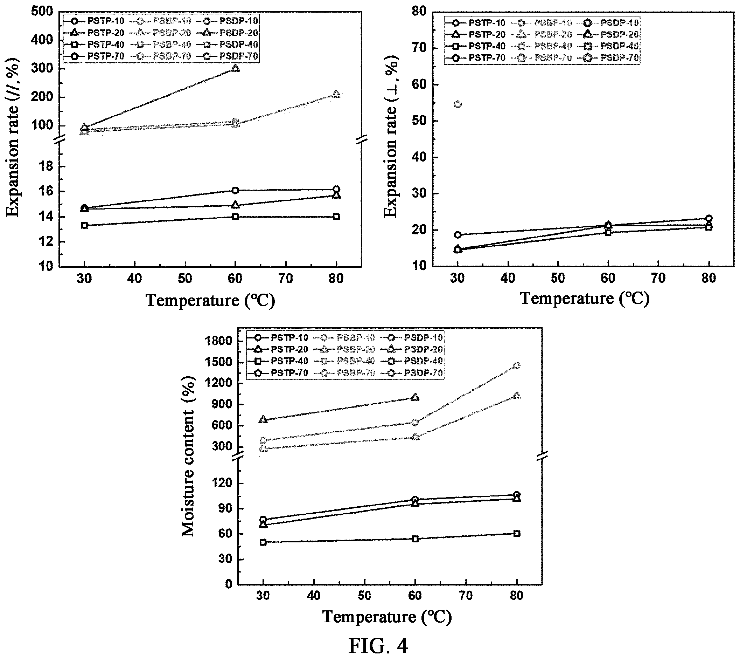

Also, as seen from FIG. 4, the anion-exchange membranes prepared in Examples 1 to 3 of the present disclosure showed dimensional stability. It can be seen that improved dimensional stability was achieved because the expansion rate and moisture content decrease as the ratio of the rigid spirobisindane group increases.

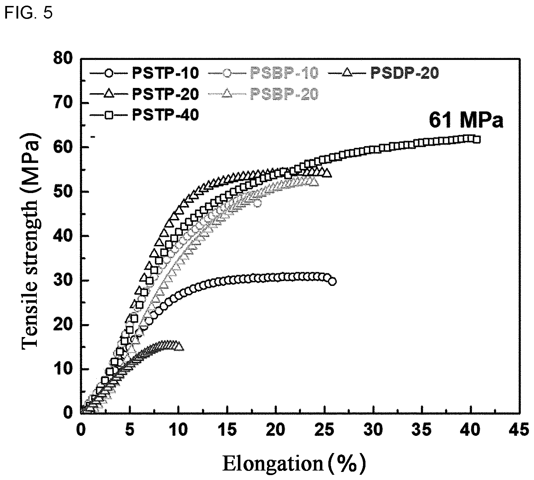

Also, as seen from FIG. 5, the anion-exchange membranes prepared in Examples 1 to 3 of the present disclosure showed mechanical properties. There is a big difference in the physical properties of the anion-exchange membranes depending on the shape of the aryl structure included within the repeating unit. Excellent film-forming ability and mechanical properties were observed when terphenyl was included within the repeating unit, allowing the anion-exchange membrane to be used as an anion-exchange membrane. When diphenylethane and biphenyl are introduced, they can be used as a binder due to high ion-exchange capacity and water permeability properties.

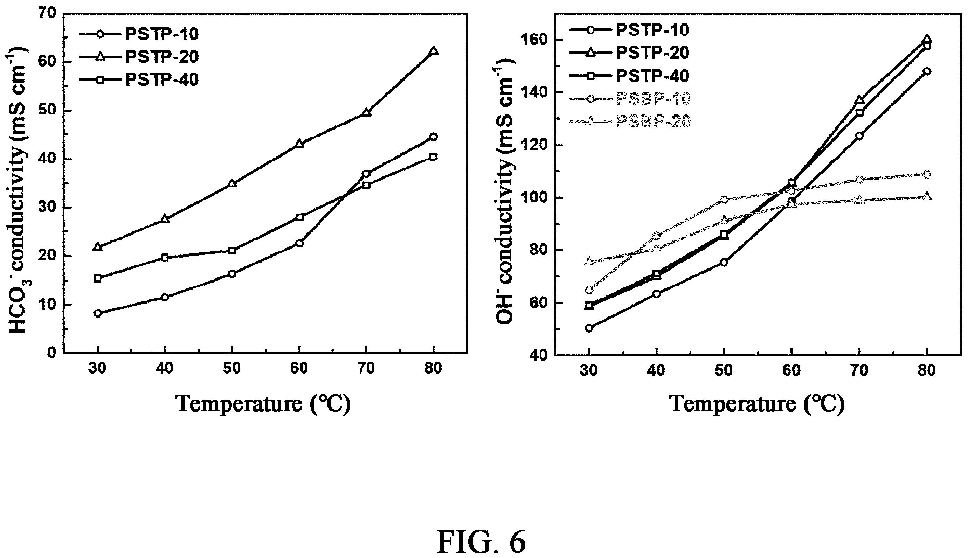

In addition, as seen from FIG. 6, the anion-exchange membranes prepared in Examples 1 and 2 of the present disclosure showed ion conductivity. In the case of PSTP used as an anion-exchange membrane, it showed very excellent conductivity of about 160 mS cm⁻¹ at 80 °C. Meanwhile, the PSBP anion-exchange membrane tended to show decreased conductivity at high temperatures (at 100% relative humidity) due to relatively low dimensional stability.

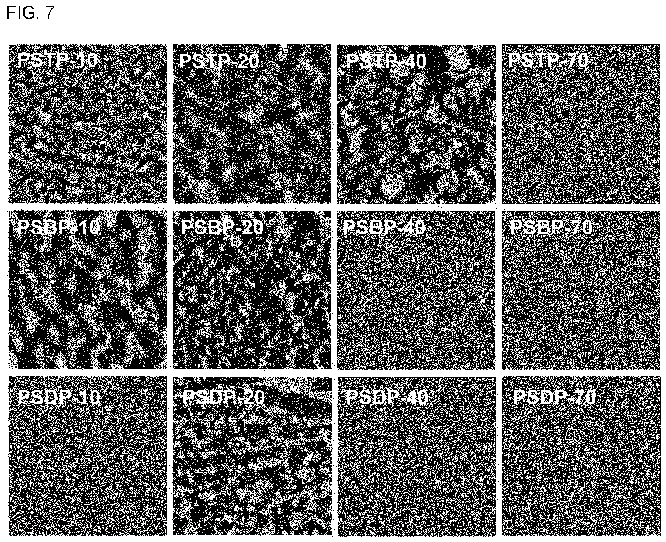

FIG. 7 shows the ion channel size and phase separation of the anion-exchange membrane prepared in Examples 1 to 3 of the present disclosure. There were differences in the size of the ion channel and the hydrophilic region depending on whether the aryl structure introduced within the repeating unit was terphenyl, biphenyl or diphenylethane. That is to say, in the case of terphenyl with the lowest ion-exchange capacity (IEC), the ion channel and hydrophilic region were the smallest, and in the case of biphenyl with the highest ion-exchange capacity, the ion channel and hydrophilic region were the largest. Furthermore, it is thought that the channel size and hydrophilic regions are also likely to decrease since the ion-exchange capacity decreases as the ratio of the spirobisindane groups increases.

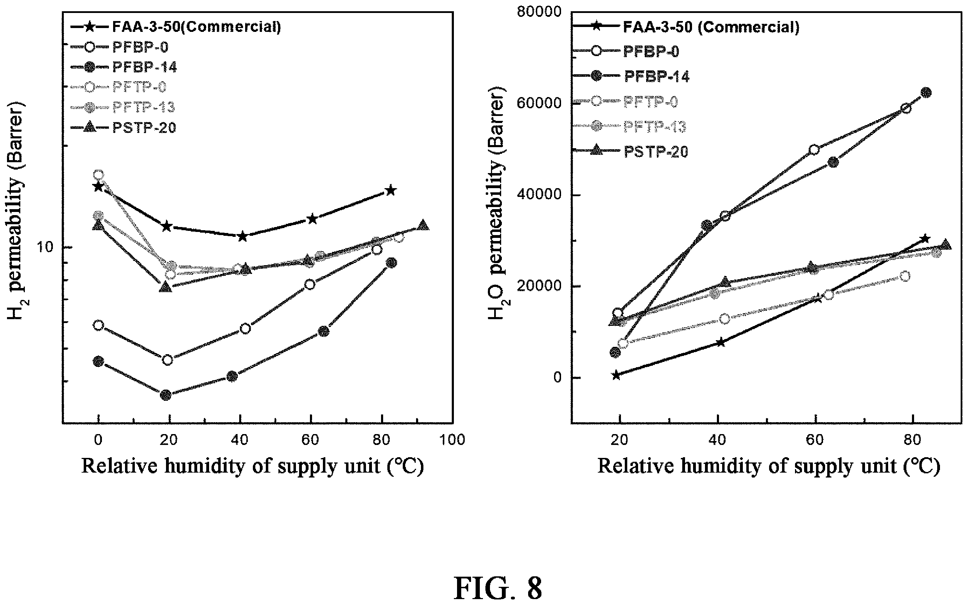

FIG. 8 shows the hydrogen permeability (a) and water permeability (b) of the anion-exchange membrane (PSTP-20) prepared in Example 1 of the present disclosure, the anion-exchange membranes (PFTP, PFBP) prepared in Comparative Examples 1 and 2, and a commercial anion-exchange membrane (FAA-3-50) as a control group (in FIG. 8, PFBP-0 contains a biphenyl group with no fluorene group within the repeating unit; PFBP-14 has a molar fraction of the fluorene group in the repeating unit of 14% and contains a biphenyl group; PFTP0 contains a terphenyl group with no fluorene group in the repeating unit; and PFTP-13 has a molar fraction of the fluorene group in the repeating unit of 13% and contains a terphenyl group).

As shown in FIG. 8, the PSTP membrane showed higher hydrogen permeability characteristics as compared to the PFBP binder prepared in Comparative Example 2. In addition, it is expected that permeation characteristics can be improved further by increasing the ratio of spirobisindane group with a bulky structure since the free volume increases.

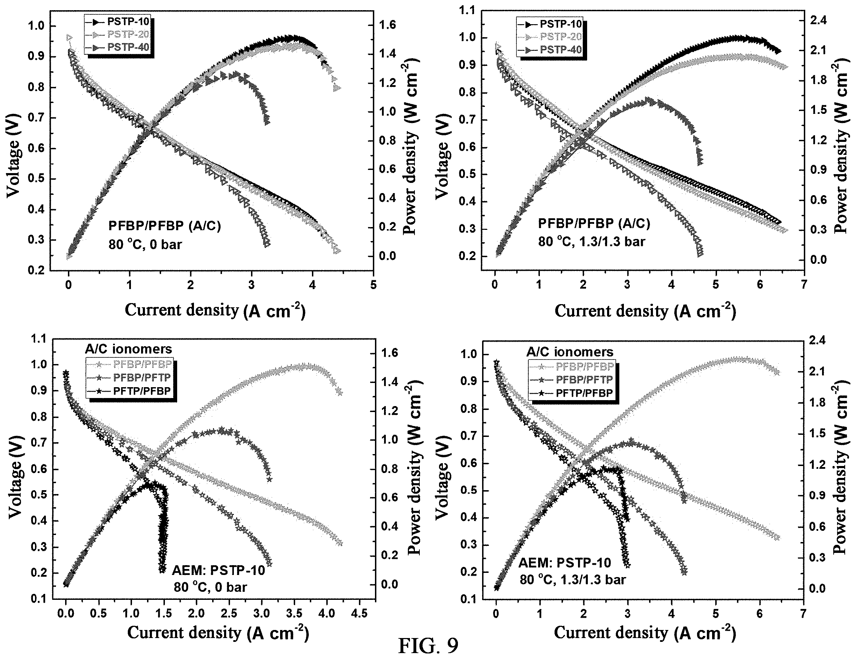

FIG. 9 shows the fuel cell performance of an anion-exchange membrane prepared in Example 1 of the present disclosure (Performance evaluation conditions are as follows: relative humidity of anode/cathode: 75%/100%, anode/cathode gas: H₂/O₂ 1000 mL/min, cell 80 °C, anode catalyst PtRU/C 0.39 mg cm⁻², cathode catalyst Pt/C 0.26 mg cm⁻²). When the platinum-group metal (PGM) catalyst was used, excellent performance of 2.25 W cm⁻² was achieved at H₂₋O₂@80 °C and 1.3 bar. On the other hand, the ion-exchange capacity decreased and conductivity decreased as the ratio of the spirobisindane group increased. It is thought that cell performance was decreased because of increased gas permeability.

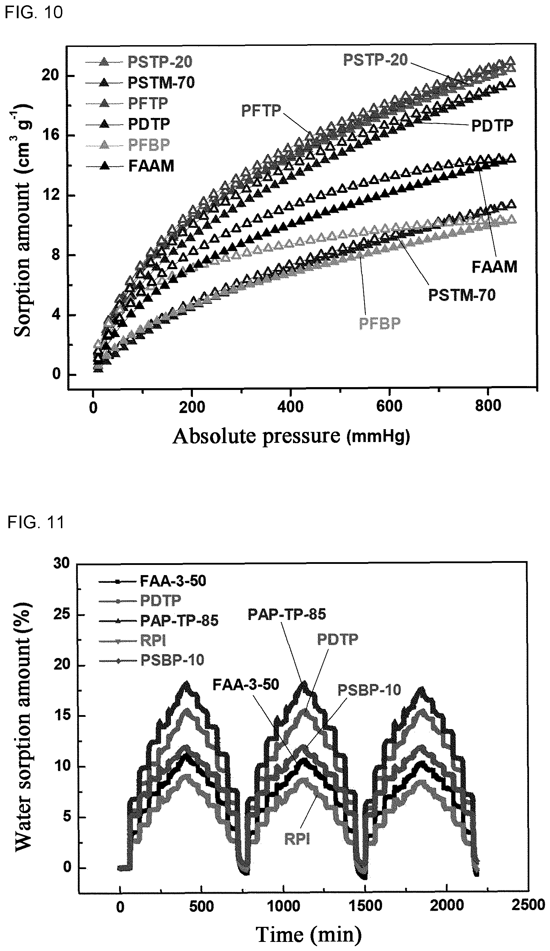

FIG. 10 shows the CO₂ absorption/desorption behavior of the anion-exchange membrane (PSTP-20) prepared in Example 1 of the present disclosure, the anion-exchange membranes (PFTP, PFBP) prepared in Comparative Examples 1 and 2, and a commercial anion-exchange membrane (FAAM) as a control group.

The absorption/desorption amount of CO₂ molecules was in the following order: PFTP ≒ PSTP > PDTP > PFTP (1 atm). In the field of carbon dioxide reduction, ionomers with high CO₂ adsorptivity and highly permeability are suitable as binders. On the other hand, it is expected that the amount of CO₂ adsorption will increase when the ratio of the spirobisindane group increases, because of increased free volume due to its bulky structure, which suggests that the ratio of the spirobisindane group can be adjusted depending on purposes.

FIG. 11 shows the water sorption amount of the anion-exchange membrane (PSBP-10) prepared in Example 2 of the present disclosure, the anion-exchange membranes (PFTP, PFBP) prepared in Comparative Examples 1 and 2, and a commercial anion-exchange membrane (FAA-3-50) as a control group, and Table 1 shows the ion-exchange capacity (IEC) and water diffusivity of various known ionomers.

**[Table 1]**

| Ionomer | IEC (mmol g⁻¹) | Water diffusivity (10⁻⁸ cm² S⁻¹) |
|---|---|---|
| PFBP-14^{a} | 3.43 | 11.4 |
| PFTP-8^{b} | 2.80 | 4.02 |
| PFTP-13^{c} | 2.82 | 9.08 |
| x-PFTP^{d} | 2.74 | 2.35 |
| PSBP-10 | 3.33 | 25.3 |
| PAP-TP-85^{e} | 2.37 | 7.5 |
| RPI(m-TPN1)^{f} | 2.53 | 15.8 |
| FAA-3-50 | - | 4.70 |
| Sustainion@PTFE^{g} | - | 12.5 |

1. a, b, and c have the same meaning as the abbreviations shown in FIG. 8.
2. d is the sample prepared according to Korean Patent Publication No. 10-2021-0168177 filed by the inventors of the present disclosure.
3. e: 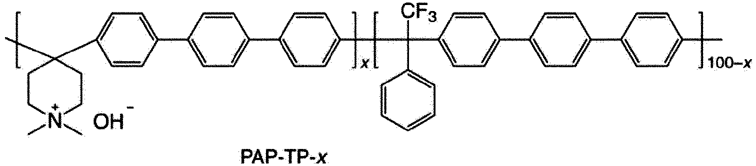
4. f: 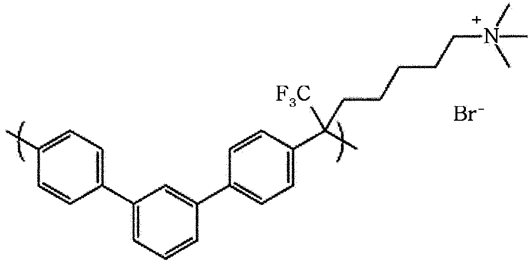
5. g:

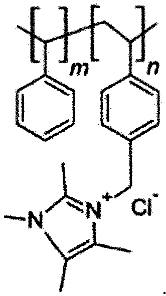

The PSBP-10 according to the present disclosure showed a high water diffusion coefficient because of increased free volume owing to the spirobisindane group. Meanwhile, ion-exchange capacity decreased and water sorption amount decreased slightly as the ratio of spirobisindane groups increased, but the diffusion coefficient increased.

Furthermore, among the various ionomers shown in Table 1, it can be seen that the ionomers containing the spirobisindane group according to the present disclosure have increased free volume as compared to others due to its bulky structure, and the water diffusion coefficient is very high accordingly.

## Claims

1. A poly(spirobisindane-aryl piperidinium) copolymer ionomer having a repeating unit represented by <Chemical Formula 1>: 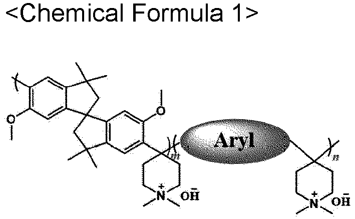 wherein Aryl is any one compound selected from the compounds represented by the following structural formulas: 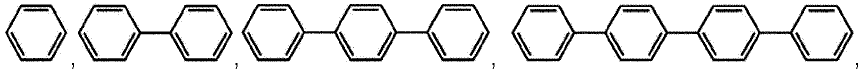 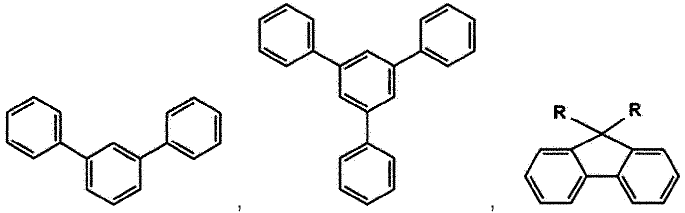 (R = H or CH₃), 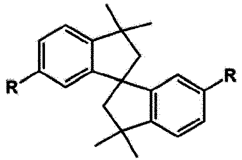 (R = H, OH or C₁-C₅ alkoxy), 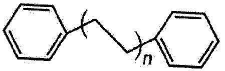 (n is an integer from 1 to 10); and
m and n are mole fractions (%) in the repeating unit of the copolymer ionomer (m > 0, n > 0, m + n = 100).

2. A method for preparing a poly(spirobisindane-aryl piperidinium) copolymer ionomer, comprising:
(I) a step of forming a solution by dissolving a monomer selected from 6,6'-dimethoxy-3,3,3',3'-tetramethyl-2,2',3,3'-tetrahydro-1,1'-spirobisindane, 1-methyl-4-piperidone and the compounds represented by the following structural formulas in an organic solvent: 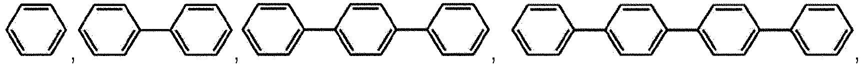 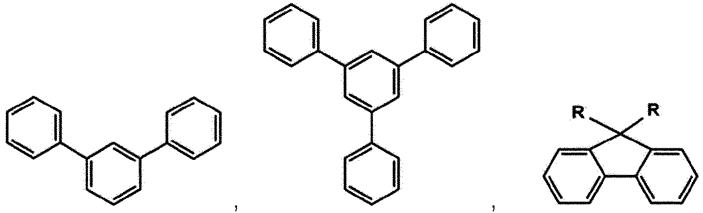 (R = H or CH₃), 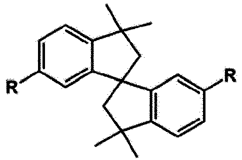 (R = H, OH or C₁-C₅ alkoxy), 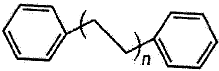 (n is an integer from 1 to 10);
(II) a step of obtaining a viscous solution by slowly adding a strong acid catalyst to the solution and then stirring and reacting the same;
(III) a step of obtaining a solid polymer by precipitating, washing and drying the viscous solution;
(IV) a step of forming a quaternary piperidinium salt by adding K₂CO₃ and an excess amount of a halomethane to a polymer solution obtained by dissolving the solid polymer in an organic solvent and reacting the same; and
(V) a step of precipitating, washing and drying the polymer solution.

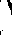

3. The method for preparing a poly(spirobisindane-aryl piperidinium) copolymer ionomer according to claim 2, wherein the organic solvent in the step (I) is one or more selected from a group consisting of dichloromethane, chloroform, dichloroethane, dibromomethane and tetrachloroethane.

4. An anion-exchange membrane comprising the poly(spirobisindane-aryl piperidinium) copolymer ionomer according to claim 1.

5. An anion-exchange composite membrane comprising:
a porous polymer supports and
the anion-exchange membrane according to claim 4 impregnated in the porous polymer support.

6. A method for preparing an anion-exchange membrane, comprising:
(a) a step of forming a polymer solution by dissolving the poly(spirobisindane-aryl piperidinium) copolymer ionomer according to claim 1 in an organic solvent;
(b) a step of obtaining a membrane by casting the polymer solution on a glass plate and drying the same; and
(c) a step of treating the obtained membrane with 1 M NaHCOs or 1 M NaOH, washing several times with ultrapure water, and drying the same.

7. The method for preparing an anion-exchange membrane according to claim 6, wherein the concentration of the polymer solution is 2 to 30 wt%.

8. The method for preparing an anion-exchange membrane according to claim 6, wherein the drying in the step (b) is performed by gradually removing the organic solvent in an oven at 80 to 90 °C for 24 hours and then completely removing the organic solvent by heating it in a vacuum oven at 120 to 150 °C for 12 hours.

9. A method for preparing an anion-exchange composite membrane, comprising:
(i) a step of preparing a porous polymer support;
(ii) a step of obtaining an ionomer solution by adding a cosolvent to a polymer solution in which the poly(spirobisindane-aryl piperidinium) copolymer ionomer according to claim 1 is dissolved in an organic solvent; and
(iii) a step of casting the ionomer solution onto a porous polymer support and impregnating and drying the same.

10. The method for preparing an anion-exchange composite membrane according to claim 9, wherein the cosolvent in the step (ii) is methanol, ethanol or isopropyl alcohol.

11. A binder for an alkaline fuel cell, comprising the poly(spirobisindane-aryl piperidinium) copolymer ionomer according to claim 1.

12. An alkaline fuel cell comprising the anion-exchange membrane according to claim 4 or the anion-exchange composite membrane according to claim 5.

13. A water electrolysis device comprising the anion-exchange membrane according to claim 4 or the anion-exchange composite membrane according to claim 5.

14. A carbon dioxide reduction device comprising the anion-exchange membrane according to claim 4 or the anion-exchange composite membrane according to claim 5.

15. A metal-air battery comprising the anion-exchange membrane according to claim 4 or the anion-exchange composite membrane according to claim 5.
